# EUROPÄISCHE PATENTSCHRIFT

(11) **EP 2 715 191 B1**
(45) Veröffentlichungstag und Bekanntmachung des Hinweises auf die Patenterteilung: **23.03.2016**
(21) Anmeldenummer: 12718235.0
(22) Anmeldetag: 04.05.2012
(51) Int. Cl.: F16H 61/00, F16H 57/04, F16H 59/68

(54) **VORRICHTUNG ZUM ÜBERWACHEN EINES SCHMIERÖLKREISLAUFS EINES AUTOMATISIERTEN FAHRZEUGGETRIEBES**
DEVICE FOR MONITORING A LUBRICATING OIL CIRCUIT OF AN AUTOMATED VEHICLE TRANSMISSION
DISPOSITIF POUR SURVEILLER UN CIRCUIT DE LUBRIFICATION D'UNE BOÎTE DE VITESSES AUTOMATISÉE

(30) Priorität: 01.06.2011 DE 102011076846
(43) Veröffentlichungstag der Anmeldung: 09.04.2014
(73) Patentinhaber: ZF Friedrichshafen AG, 88038 Friedrichshafen (DE)
(72) Erfinder: HEINZELMANN, Karl-Fritz, 88074 Meckenbeuren (DE)
(86) Internationale Anmeldenummer: PCT/EP2012/058176
(87) Internationale Veröffentlichungsnummer: WO 2012/163626

(56) Entgegenhaltungen:
- WO-A1-2008/012169
- WO-A1-2009/030612
- US-A- 4 489 305

## Beschreibung

Die vorliegende Erfindung betrifft eine Vorrichtung zum Überwachen des Schmierölkreislaufs eines automatisierten Fahrzeuggetriebes gemäß dem Oberbegriff des Anspruches 1 und ein automatisiertes Fahrzeuggetriebe mit einer derartigen Vorrichtung nach Anspruch 5.

Automatisierte Fahrzeuggetriebe finden insbesondere im Nutzfahrzeugbereich eine immer breitere Anwendung. Unter automatisierten Fahrzeuggetrieben werden Schaltgetriebe verstanden, deren Gangstufen nicht manuell sondern mittels einer mechatronischen Steuerung automatisch geschaltet werden beispielsweise mit Hilfe pneumatischer Stellglieder. Unter automatisierten Fahrzeuggetrieben werden auch teilautomatisierte Getriebe verstanden, bei denen bestimmte Schaltvorgänge auch manuell betätigt werden können. Die vorliegende Erfindung betrifft den Schmierölkreislauf von automatisierten Fahrzeuggetrieben mit einer pneumatischen Schaltaktuatorik, d.h. mit pneumatischen Steuerventilen und druckluftbetätigten Kolben-Zylinder-Einheiten.

In der DE 199 15 471 A1 ist ein Schmierölkreislauf in einem Getriebe mit einer Schaltaktuatorik beschrieben. Zur Überwachung des Schmierölkreislaufs ist ein Temperatursensor für das Getriebeöl vorgesehen, der beispielsweise in einem Getriebe-Schaltgerät integriert sein kann, das eine Getriebesteuerelektronik und eine Schaltaktuatorik beinhaltet. Ein derartiges Getriebe-Schaltgerät wird auch Mechatronikeinheit genannt.

Es ist die Aufgabe der vorliegenden Erfindung ein eingangs beschriebenes Fahrzeuggetriebe im Bezug auf dessen langfristig zuverlässige Funktion und Wartungsfreundlichkeit weiter zu verbessern.

Die genannte Aufgabe wird durch eine Vorrichtung gemäß Patentanspruch 1 und durch ein automatisiertes Fahrzeuggetriebe nach Anspruch 5 gelöst. Die abhängigen Ansprüche beinhalten bevorzugte Weiterbildungen der Erfindung.

Demnach betrifft die Erfindung eine Vorrichtung zum Überwachen eines Schmierölkreislaufs eines automatisierten Fahrzeuggetriebes, wobei an oder in dem Getriebe eine elektropneumatische Mechatronikeinheit angeordnet ist. Zur Lösung der Aufgabe ist vorgesehen, dass ein Öldrucksensor zum Messen des Druckes in dem Schmierölkreislauf in oder an der Mechatronikeinheit angeordnet ist.

Die elektropneumatische Mechatronikeinheit umfasst zumindest elektronische Steuerungselemente und pneumatische Steuerungselemente wie bspw. elektromagnetisch ansteuerbare, pneumatische Steuerventile und pneumatische Stellzylinder als Teil einer Schaltaktuatorik.

Im Rahmen der Erfindung können alle bekannten Arten von Öldrucksensor verwendet werden, beispielsweise resistive, kapazitive oder induktive Drucksensoren oder nach dem piezoelektrischen Prinzip funktionierende Drucksensoren.

Der Öldrucksensor ermöglicht die kontinuierliche Überwachung der Funktion des Schmierölkreislaufs in dem Fahrzeuggetriebe durch die Erfassung und Auswertung des Öldruckes. Bei herkömmlichen elektropneumatisch automatisierten Schaltgetrieben wird der Schmieröldruck in der Regel nicht überwacht, sodass ein zu geringer Ölstand nur zufällig oder bei Wartungsarbeiten anhand eines Ölmessstabes oder eines Ölschauglases festgestellt werden kann. Bis dahin können im Getriebe jedoch bereits Schäden durch Schmierölmangel entstanden sein.

Die Anordnung des Öldrucksensors in einer elektropneumatischen Mechatronikeinheit des Getriebes ermöglicht eine kompakte Bauweise, eine einfache Verbindung des Öldrucksensors mit den elektronischen Steuerungselementen des Getriebes und einen gemeinsamen Anschluss zur Signalübertragung vom Getriebe zu anderen Steuerungseinheiten im Fahrzeug. Im Vergleich zu einem Öldrucksensor, der separat von außen am Getriebegehäuse angebaut ist, ist der in der Mechatronikeinheit integrierte Öldrucksensor und dessen Anschluss und Verkabelung vor schädlichen äußeren Einflüssen geschützt, zum Beispiel vor Beschädigung durch mechanische Einwirkungen. Des Weiteren schützt die Lage des Öldrucksensors im abgedichteten Innenraum der Mechatronikeinheit vor schädlichen Einflüssen, denen er im Innenraum des Schaltgetriebes ausgesetzt wäre, wie z.B. Öl, Öldämpfen und hohen Temperaturen.

Mit Hilfe der vorliegenden Erfindung kann beispielsweise der Getriebeölstand überwacht werden, indem ein unterer Grenzwert des Öldruckes als Signal dafür verwendet wird, dass der Getriebeölstand zu niedrig ist.

Eine bevorzugte Ausführung der Erfindung sieht vor, dass der Öldrucksensor mit den elektronischen Steuerungselementen in der Mechatronikeinheit unmittelbar verbunden ist. Dadurch werden eine einfache Einbindung der Öldrucksensorsignale in die Getriebe- und Fahrzeugsteuerung und ein kompakter Aufbau der Mechatronikeinheit begünstigt.

Gemäß einer anderen bevorzugten Ausführung ist der Öldrucksensor mit anderen Sensoren in der Mechatronikeinheit zu einem Sensormodul zusammengefasst. Andere Sensoren im Sensormodul können beispielsweise Temperatur-, Luftdruck-, Drehzahl- oder Neigungssensoren sein, deren Signale zusammen mit den Signalen des Öldrucksensors zur Steuerung, Regelung und Überwachung der Funktion des Fahrzeuggetriebes verwendet werden. So können die Signale aller Sensoren eines Sensormoduls über eine einzige, gemeinsame Schnittstelle an die elektronischen Steuerungselemente der Mechatronikeinheit übertragen werden. Ein eigenes Sensormodul vereinfacht die Montage, weil das Sensormodul unabhängig von den anderen Teilen der Mechatronikeinheit und des Getriebes vormontiert und geprüft werden kann bevor es als komplette Einheit in die Mechatronikeinheit eingebaut wird.

Gemäß einer weiteren bevorzugten Ausführung der Erfindung sind in der Mechatronikeinheit Übertragungsmittel vorgesehen, um die vom Öldrucksensor erfassten Werte und/oder daraus abgeleitete Fehlermeldungen an eine entfernt positionierte Steuerungseinheit bzw. Anzeigevorrichtung zu übertragen. Die Signale bzw. die Fehlermeldungen können zum Beispiel an eine Anzeige für den Fahrer, eine Fuhrparkzentrale oder eine Werkstatt übertragen werden. Die Signale und Fehlermeldungen können über Kabelverbindungen innerhalb des Fahrzeugs oder drahtlos im Fahrzeug und an andere Orte übertragen werden.

Schließlich umfasst die vorliegende Erfindung ein automatisiertes Fahrzeuggetriebe mit einer Vorrichtung zum Überwachen des Schmierölkreislaufs, wie oben beschrieben.

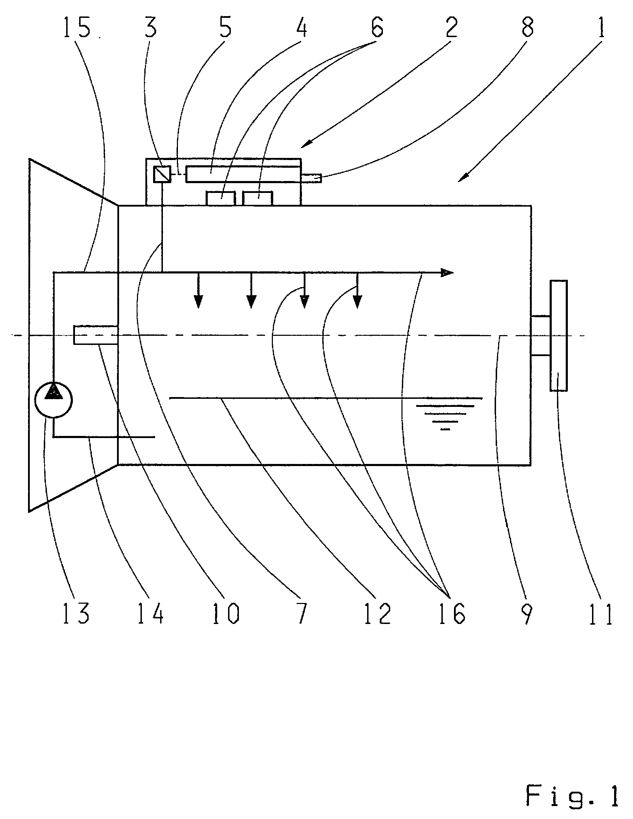

Im Folgenden ist die Erfindung anhand eines bevorzugten Ausführungsbeispieles in der Figur näher erläutert. Die Figur zeigt ein erfindungsgemäßes Fahrzeuggetriebe mit einer erfindungsgemäßen Vorrichtung zum Überwachen des Schmierölkreislaufs in einer schematischen Darstellung.

Das automatisierte Fahrzeuggetriebe 1 weist eine Antriebswelle 10 und einen Abtriebsflansch 11 auf, die beide konzentrisch zu einer Mittelachse 9 angeordnet sind.

Eine Mechatronikeinheit 2 ist im oberen Bereich des Fahrzeuggetriebes 1 angeordnet. Die Mechatronikeinheit 2 umfasst elektronische Steuerungselemente 4, mehrere pneumatische Elemente 6 der Schaltaktuatorik in Form von elektropneumatischen Steuerventilen und pneumatischen Kolben-Zylindereinheiten sowie einen Öldrucksensor 3. Der Öldrucksensor 3 ist durch eine signalübertragende Verbindung 5 mit zumindest einem elektronischen Steuerungselement 4 verbunden.

Nicht dargestellt ist die oben beschriebene Ausführungsform, bei der der Öldrucksensor 3 zusammen mit anderen Sensoren des Fahrzeuggetriebes 1 in einem Sensormodul zusammengefasst sind. Bei einer derartigen Ausführung ist es vorteilhaft eine gemeinsame Schnittstelle zur Signalübertragung der Signale aller Sensoren von dem Sensormodul zu den elektronischen Bauteilen 4 der Mechatronikeinheit 2 vorzusehen.

Die Mechatronikeinheit 2 weist eine Schnittstelle 8 zur Datenübertragung in Form eines Steckers auf, über die die elektronischen Elemente 4 der Mechatronikeinheit 2 mit externen Steuerungselementen verbunden sind.

Das Fahrzeuggetriebe ist bis zu einem bestimmten Füllstand mit Schmieröl befüllt, wobei sich das Schmieröl in einem Schmierölsumpf 12 im unteren Bereich des Fahrzeuggetriebes sammelt. Ein Schmierölkreislauf des Fahrzeuggetriebes 1 umfasst eine Saugleitung 14 durch die das Schmieröl von einer Schmierölpumpe 13 aus dem Schmierölsumpf 12 angesaugt wird, sowie eine Druckleitung 15 durch die das Schmieröl zu den Schmierstellen 16 gefördert wird. Von den Schmierstellen 16 läuft das Schmieröl zurück in den Schmierölsumpf 12. Weitere Elemente des Schmierölkreislaufes, wie Filter, Ventile sind nicht dargestellt.

Eine Öldruckleitung 7 zweigt von der Druckleitung 15 ab und ist in die Mechatronikeinheit 2 verlegt. Am Ende der Öldruckleitung 7 in der Mechatronikeinheit 2 ist der Öldrucksensor 3 derart angeordnet, dass er den Öldruck in der Druckleitung 15 des Schmierölkreislaufes erfassen kann.

Der Innenraum der Mechatronikeinheit 2 ist gegenüber dem Innenraum des Fahrzeuggetriebes 1 abgedichtet, sodass die in der Mechatronikeinheit 2 angeordneten Bauteile geschützt sind von schädlichen Einflüssen aus dem Innenraum des Fahrzeuggetriebes, wie z.B. hohen Temperaturen, Öl, Öldämpfen oder Verunreinigungen.

### Bezugszeichen

- 1: Fahrzeuggetriebe
- 2: Mechatronikeinheit
- 3: Öldrucksensor
- 4: Elektronische Steuerungselemente
- 5: Verbindung
- 6: Pneumatische Elemente
- 7: Öldruckleitung
- 8: Schnittstelle
- 9: Mittelachse
- 10: Antriebswelle
- 11: Abtriebsflansch
- 12: Schmierölsumpf
- 13: Ölpumpe
- 14: Saugleitung
- 15: Druckleitung
- 16: Schmierstellen

## Patentansprüche

1. Vorrichtung zum Überwachen eines Schmierölkreislaufs eines automatisierten Fahrzeuggetriebes (1), wobei an oder in dem Fahrzeuggetriebe eine elektropneumatische Mechatronikeinheit (2) angeordnet ist, **dadurch gekennzeichnet, dass** ein Öldrucksensor (3) zum Messen des Druckes in dem Schmierölkreislauf in oder an der Mechatronikeinheit (2) angeordnet ist.

2. Vorrichtung nach Anspruch 1, **dadurch gekennzeichnet, dass** der Öldrucksensor (3) mit den elektronischen Steuerungselementen (4) in der Mechatronikeinheit (2) unmittelbar verbunden ist.

3. Vorrichtung nach Anspruch 1, **dadurch gekennzeichnet, dass** der Öldrucksensor (3) mit anderen Sensoren in der Mechatronikeinheit (2) zu einem Sensormodul zusammengefasst ist.

4. Vorrichtung nach Anspruch 1, 2 oder 3, **dadurch gekennzeichnet, dass** in der Mechatronikeinheit (2) Übertragungsmittel vorgesehen sind, um die vom Öldrucksensor (3) erfassten Daten und/oder daraus abgeleitete Fehlermeldungen an eine entfernt positionierte Steuerungseinheit zu übertragen.

5. Automatisiertes Fahrzeuggetriebe, **gekennzeichnet durch** eine Vorrichtung zum Überwachen des Schmierölkreislaufs nach einem der vorgenannten Ansprüche.

## Claims

1. Device for monitoring a lubricating oil circuit of an automated vehicle transmission (1), wherein an electropneumatic mechatronic unit (2) is arranged on or in the vehicle transmission, **characterized in that** an oil pressure sensor (3) for measuring the pressure in the lubricating oil circuit is arranged in or on the mechatronic unit (2).

2. Device according to Claim 1, **characterized in that** the oil pressure sensor (3) is connected directly to the electronic control elements (4) in the mechatronic unit (2).

3. Device according to Claim 1, **characterized in that** the oil pressure sensor (3) is combined with other sensors in the mechatronic unit (2) to form a sensor module.

4. Device according to Claim 1, 2 or 3, **characterized in that** transmission means for transmitting the data detected by the oil pressure sensor (3) and/or error messages derived therefrom to a remotely positioned control unit are provided in the mechatronic unit (2).

5. Automated vehicle transmission, **characterized by** a device for monitoring the lubricating oil circuit according to one of the preceding claims.

## Revendications

1. Dispositif pour surveiller un circuit d'huile de lubrification d'une boîte de vitesses automatisée (1) d'un véhicule, dans lequel une unité mécatronique électropneumatique (2) est disposée sur ou dans la boîte de vitesses, **caractérisé en ce qu'**un capteur de pression d'huile (3) pour mesurer la pression dans le circuit d'huile de lubrification est disposé dans ou sur l'unité mécatronique (2).

2. Dispositif selon la revendication 1, **caractérisé en ce que** le capteur de pression d'huile (3) est connecté directement aux éléments de commande électroniques (4) dans l'unité mécatronique (2).

3. Dispositif selon la revendication 1, **caractérisé en ce que** le capteur de pression d'huile (3) est rassemblé avec d'autres capteurs dans l'unité mécatronique (2) pour former un module de capteurs.

4. Dispositif selon la revendication 1, 2 ou 3, **caractérisé en ce que** dans l'unité mécatronique (2) sont prévus des moyens de transfert afin de transmettre les données détectées par le capteur de pression d'huile (3) et/ou des messages d'erreur en résultant à une unité de commande positionnée à distance.

5. Boîte de vitesses automatisée de véhicule, **caractérisée par** un dispositif pour surveiller le circuit d'huile de lubrification selon l'une quelconque des revendications précédentes.
